(19) Europäisches Patentamt
European Patent Office
Office européen des brevets

(11) **EP 3 230 385 B1**

(12) **EUROPÄISCHE PATENTSCHRIFT**

(45) Veröffentlichungstag und Bekanntmachung des Hinweises auf die Patenterteilung:
**15.04.2020  Patentblatt 2020/16**

(21) Anmeldenummer: **15798331.3**

(22) Anmeldetag: **23.11.2015**

(51) Int Cl.:
*C09C 1/00* (2006.01)    *C04B 35/628* (2006.01)
*C09D 5/24* (2006.01)    *D21H 17/63* (2006.01)
*D21H 19/38* (2006.01)    *D21H 21/30* (2006.01)
*D21H 21/40* (2006.01)    *C09D 7/61* (2018.01)

(86) Internationale Anmeldenummer:
**PCT/EP2015/002351**

(87) Internationale Veröffentlichungsnummer:
**WO 2016/091354 (16.06.2016 Gazette 2016/24)**

(54) **ELEKTRISCH LEITFÄHIGE, FARBIGE INTERFERENZPIGMENTE**

ELECTRICALLY CONDUCTIVE, COLORED INTERFERENCE PIGMENTS

PIGMENTS INTERFÉRENTIELS COLORÉS ÉLECTRIQUEMENT CONDUCTEURS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2014  DE 102014018276**

(43) Veröffentlichungstag der Anmeldung:
**18.10.2017  Patentblatt 2017/42**

(73) Patentinhaber: **Merck Patent GmbH**
**64293 Darmstadt (DE)**

(72) Erfinder:
• **RUEGER, Reinhold**
 **63322 Roedermark (DE)**
• **KLEIST, Bjoern**
 **67578 Gimbsheim (DE)**

(56) Entgegenhaltungen:
**EP-A1- 0 950 693**      **US-A- 3 087 827**
**US-A1- 2004 165 272**      **US-B1- 6 686 042**

**Beschreibung**

Die vorliegende Erfindung betrifft elektrisch leitfähige, farbige Interferenzpigmente, insbesondere semitransparente, plättchenförmige Interferenzpigmente, die eine äußerste Schicht aufweisen, die kristallinen Kohlenstoff in Form von Graphit und/oder Graphen enthält, ein Verfahren zur Herstellung solcher Pigmente sowie die Verwendung der so hergestellten Pigmente.

Elektrisch leitfähige Pigmente werden heute in verschiedenen Anwendungsbereichen eingesetzt, zum Beispiel für antistatische Beschichtungen der verschiedensten Art, antistatische Fußbodenbeläge, antistatische Ausrüstungen explosionsgeschützter Räume, in abschirmenden Beschichtungen und Verpackungen in der Elektrotechnik, in feldsteuernden Isolierstoffen oder in elektrisch leitfähigen Grundierungen für das Lackieren von Kunststoffen.

Immer noch gebräuchlich ist der Einsatz von Ruß oder Graphit als leitfähiger Füllstoff in den jeweiligen Anwendungsmedien. Allerdings führt die Anwendung von Ruß oder Graphit zur Dunkelfärbung der damit versetzten Materialien, was oft als nachteilig wahrgenommen wird.

Es sind daher bereits seit einiger Zeit elektrisch leitfähige Pigmente auf der Basis transparenter Substrate, vor allem auf der Basis dünner Glimmerplättchen, bekannt und verfügbar. Diese Pigmente weisen auf dem Glimmersubstrat in der Regel mindestens eine leitfähige Beschichtung aus einem dotierten Zinnoxid auf. Häufig wird mit Antimon dotiertes Zinndioxid eingesetzt. Pigmente dieser Art sind beispielsweise als Minatec® 31 CM oder Minatec® 51 CM der Firma Merck KGaA, Deutschland, kommerziell erhältlich. Sie sind u. a. in den Patentschriften DE 38 42 330, DE 42 37 990, EP 0 139 557, EP 0 359 569 und EP 0 743 654 beschrieben.

Solche Pigmente weisen eine hohe Transparenz und eine helle Eigenfarbe auf und bieten daher viele optische Vorteile gegenüber dem Einsatz von Ruß oder Graphit, verfügen jedoch meist über eine unbunte oder hellgraue Eigenfärbung. Um bunte und/oder deckende leitfähige Anwendungsmedien zu erzielen müssen die leitfähigen Pigmente mit anderen Farbmitteln kombiniert eingesetzt werden. Solche Kombinationen sind technisch möglich, führen aber oft zu einer extrem hohen Pigmentmassekonzentration in den Anwendungsmedien. Insbesondere wird durch den Zusatz von Farbmitteln die Ausbildung von Leitpfaden im Anwendungsmedium vermindert oder unterbrochen, so dass es dort zu einer starken Erhöhung des elektrischen Widerstands kommt. Diese Erhöhung kann nicht in jedem Falle durch eine gleichermaßen erhöhte Konzentration an leitfähigen Pigmenten ausgeglichen werden, da die Anwendungssysteme technisch bedingte Grenzen der Pigmentbeladung aufweisen, deren Überschreitung zu Verarbeitungsproblemen oder Problemen bei der Erzielung der gewünschten technischen Ergebnisse führt.

Es besteht daher ein Bedarf an elektrisch leitfähigen Pigmenten, mit denen sich farbige elektrisch leitfähige Anwendungsmedien mit befriedigendem Deckvermögen erhalten lassen, ohne dass weitere Farbmittel eingesetzt werden müssen.

Effektpigmente, die ein gegenüber transparenten Effektpigmenten verbessertes Deckvermögen aufweisen, sind bereits bekannt. Dabei werden in der Regel opake Trägermaterialien oder semitransparente Schichten auf transparenten Trägermaterialien eingesetzt um das Deckvermögen der Effektpigmente zu erhöhen. Eine Opazität der Trägerplättchen oder der Beschichtungen kann dabei beispielsweise durch den Einschluss von partikulärem Ruß in dielektrische Materialien erreicht werden. Pigmente, die solche Träger oder Beschichtungen enthalten, sind als "Carbon Inclusion"-Pigmente bekannt.

Aus US 2004/0165272 A1 sind optisch variable mehrlagige Interferenzpigmente bekannt, die drei- oder fünflagige Schichtsysteme aus abwechselnd dielektrischen Schichten und Kohlenstoffschichten aufweisen. Die optische Dicke der dielektrischen Schichten wird dabei gezielt auf die gewünschte Interferenzwellenlänge eingestellt.

Auch in US 6,686,042 B1 sind optisch variable Pigmente beschrieben, die symmetrisch oder unsymmetrisch aufgebaut sein können und auf einem Reflektorsubstrat einen Schichtaufbau aus alternierenden Absorptionsschichten und dielektrischen Schichten aufweisen. Bei den Absorptionsschichten kann es sich um Graphit handeln.

US 3,087,827 offenbart Glimmerpigmente, die mit Titandioxid oder Zirkonoxid beschichtet sind und eine äußere Schicht aus Kohlenstoff aufweisen.

Effektpigmente mit einer Kohlenstoff haltigen Schicht, bei deren Herstellung Metalloxidschichten, die sich bereits auf dem plättchenförmigen Träger befinden, reduziert werden, sind beispielsweise in den Druckschriften EP 0 525 526 und EP 0 735 114 beschrieben.

So werden in EP 0 525 526 B1 hellgraue, anthrazitfarbene oder schwarze Pigmente erhalten, indem Effektpigmente, die mit Titandioxid und mindestens einem weiteren Metalloxid beschichtet sind, unter inerten Bedingungen per Pyrolyse mit Kohlenstoff haltigen Schichten beschichtet werden, wobei das Metall des Metalloxids reduziert wird. Die erhaltenen Pigmente werden als abriebfest dargestellt und insbesondere in der Kosmetik eingesetzt. Über ihre elektrischen Eigenschaften ist nichts berichtet.

Aus EP 0 735 114 A1 sind Glanzpigmente auf Basis reduzierter $TiO_2$-beschichteter silikatischer Plättchen bekannt, die aus titandioxidbeschichteten silikatischen Plättchen im Gasgemisch aus einer verdampften organischen Verbindung und Ammoniak erhalten werden. Die Pigmente werden als schwitzwasserbeständig und wetterecht beschrieben, ihre elektrischen Eigenschaften werden nicht diskutiert.

EP 0 950 693 A1 beschreibt mehrschichtige Perlglanzpigmente auf der Basis eines absorbierenden plättchenförmigen Substrates, das mit alternierenden hoch- und niedrigbrechenden Schichten überzogen ist. Das absorbierende Substrat kann aus Graphitplättchen bestehen oder Graphit enthalten.

Durch die Zersetzung verschieden zusammengesetzter Polymerschichten auf der Oberfläche von Effektpigmenten lassen sich farbige oder optisch variable Effektpigmente mit gutem Glanzverhalten herstellen, wie es beispielsweise aus der EP 1 641 886 B1 oder der DE 699 16 717 T2 hervorgeht. So enthalten die in EP 1 641 886 B1 beschriebenen Pigmente auf ihrer Oberfläche eine Kohlenstoff enthaltende ionische Zusammensetzung, die nur geringe Mengen an Stickstoff enthält, während in DE 699 16 717 T2 Effektpigmente beschrieben werden, bei denen die Beschichtung auf dem Trägermaterial 5-25 Gewichtsprozent Stickstoff in einer ungesättigten Verbindung enthält. Über die elektrischen Eigenschaften der erhaltenen Pigmente wird in beiden Patentschriften nichts ausgesagt.

Aus DE 2557796 C2, DE 4227082 A1 und EP 0 675 175 A2 sind jeweils kohlenstoffhaltige Pigmente bekannt, bei denen Kohlenstoff, der aus kolloidalem Material gewonnen wird, in Metalloxidschichten eingelagert wird, die auf Effektpigmentsubstraten aufgefällt werden, wobei die Belegung mit Kolloid und Metalloxid gleichzeitig erfolgt und anschließend aus dem kolloidalen Material per Pyrolyse Kohlenstoff gewonnen wird. Die entstehenden Effektpigmente werden als glänzend und witterungsstabil beschrieben, sind jedoch gemäß EP 0 675 175 nicht elektrisch leitfähig. Letzeres lässt sich durch den hohen Anteil an Metalloxid, der die eingelagerten Kohlenstoffpartikel umgibt und die Ausbildung von Leitpfaden in der Schicht verhindert, auch gut erklären.

Um elektrisch leitfähige Effektpigmente zu erhalten, werden gemäß DE 41 40 296 A1 plättchenförmige Pigmente mit einer mit Rußpartikeln durchsetzten Metalloxidschicht überzogen, wobei letztere mit zusätzlichen Metalloxidpartikeln dotiert ist, um eine elektrische Leitfähigkeit des Pigmentes herzustellen oder zu erhöhen. Während es sich bei der Metalloxidschicht in der Regel um eine Titandioxidschicht handelt, werden in diese außer Rußpartikeln noch $SiO_2$ oder $Al_2O_3$ eingelagert, was zu einer verbesserten Leitfähigkeit führt. Allerdings erreichen die Pigmente lediglich einen spezifischen Pulverwiderstand von im besten Falle $2x10^6$ Ohm*cm. Die so erhaltenen Pigmente weisen Farbnuancen von schwarz bis hellgrau oder silbergrau auf.

Die vorab beschriebenen Pigmente aus dem Stand der Technik weisen entweder gute Farbeigenschaften mit unbestimmten elektrischen Eigenschaften oder befriedigende elektrisch leitende Eigenschaften mit unbunter Farbstellung auf. Zur Herstellung von Anwendungsmedien mit verlässlichen abschirmenden oder antistatischen elektrischen Eigenschaften sind aber spezifische Pulverwiderstände der eingesetzten elektrisch leitfähigen Pigmente von höchstens $1x10^6$ Ohm*cm notwendig um die geforderten elektrischen Eigenschaften der Endprodukte zu garantieren. Außerdem besteht immer noch ein Bedarf an Effektpigmenten mit attraktiven Farbeigenschaften, die die notwendige hohe elektrische Leitfähigkeit aufweisen.

Aufgabe der vorliegenden Erfindung ist es, elektrisch leitfähige Effektpigmente mit bunten Interferenzfarben zur Verfügung zu stellen, welche einen spezifischen Pulverwiderstand von höchstens $1x10^6$ Ohm*cm oder kleiner aufweisen und über ein so hohes Deckvermögen verfügen, dass eine lediglich mit diesen Pigmenten versehene Beschichtung auch auf weißem Untergrund eine deutliche sichtbare bunte Farbe aufweist, die Pigmente also ein gutes Deckvermögen besitzen.

Darüber hinaus ist es auch Aufgabe der vorliegenden Erfindung, ein Verfahren zur Herstellung der vorab beschriebenen Pigmente zur Verfügung zu stellen.

Eine weitere Aufgabe der vorliegenden Erfindung besteht darin, die Verwendung derartiger Pigmente aufzuzeigen.

Die Aufgabe der vorliegenden Erfindung wird gelöst durch elektrisch leitfähige, farbige Interferenzpigmente auf der Basis eines plättchenförmigen Trägers gemäß Anspruch 1.

Die Aufgabe der Erfindung wird ebenfalls gelöst durch ein Verfahren zur Herstellung der genannten leitfähigen Pigmente gemäß Anspruch 6.

Des Weiteren wird die Aufgabe der Erfindung gelöst durch die Verwendung der vorab beschriebenen elektrisch leitfähigen Interferenzpigmente in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten oder Pigmentpräparationen.

Gegenstand der vorliegenden Erfindung ist ein elektrisch leitfähiges, farbiges plättchenförmiges Interferenzpigment, welches auf einem plättchenförmigen Träger basiert und mit einer oder mehreren Schichten beschichtet ist, wobei die äußerste Schicht der Beschichtung, die am weitesten vom Träger entfernt ist, zu mindestens 95 Gew. %, bezogen auf das Gewicht dieser Schicht, aus Kohlenstoff besteht und kristallinen Kohlenstoff in Form von Graphit und/oder Graphen enthält, gemäß Anspruch 1.

Die äußerste Schicht, die zu mindestens 95 Gew. %, bezogen auf das Gewicht dieser Schicht, aus Kohlenstoff besteht und kristallinen Kohlenstoff in Form von Graphit und/oder Graphen enthält, wird nachfolgend als "äußerste, kristallinen Kohlenstoff enthaltende Schicht" bezeichnet, sofern nicht anders angegeben.

Bevorzugt ist eine Ausführungsform der vorliegenden Erfindung, bei der die äußerste, kristallinen Kohlenstoff enthaltende Schicht zu mindestens 98 Gew.% aus Kohlenstoff besteht.

Diese äußerste, kristallinen Kohlenstoff enthaltenden Schicht umhüllt die sich unterhalb dieser äußersten Schicht auf dem Trägerplättchen befindliche(n) Schicht(en) und ist vorzugsweise kompakt und als geschlossene Schicht ausgebildet. Sie weist eine geometrische Dicke im Bereich von lediglich 1-5 nm auf. Im unteren Schichtdickenbereich bis 3 nm entspricht dies einer einzelnen Graphenschicht oder Graphit, der aus sehr wenigen (<10) Kohlenstoffschichten zusammengesetzt ist.

Gegenüber Industrieruß, der auch als Carbon Black bezeichnet wird, weisen sowohl Graphen als auch Graphitkristalle eine deutlich höhere Ordnung auf. Als Carbon Black wird ein industriell durch thermische Zersetzung oder durch unvollständige Verbrennung von Kohlenwasserstoffen hergestellter feinteiliger Kohlenstoff bezeichnet, der aus kugelförmigen Primärteilchen besteht, die zu Aggregaten mit einer Teilchengröße unter 1000 nm verwachsen sind. Sie enthalten geringe Fremdbestandteile.

Während Graphen eine einzelne Schicht in Graphitstruktur darstellt, deren Natur in Analogie zu einem polyzyklischen aromatischen Kohlenwasserstoff von quasi unendlicher Größe beschrieben wird und bei der die Anordnung der Kohlenstoffatome in der Schicht Bienenwaben-ähnlich vorliegt, stellt Graphit eine allotrope Form des Elementes Kohlenstoff dar, die aus Schichten hexagonal angeordneter Kohlenstoffatome in einem planar kondensierten Ringsystem besteht. Die Schichten sind parallel zueinander in kristallographisch dreidimensionaler Fernordnung gestapelt. Es gibt zwei allotrope Formen mit verschiedener Stapelanordnung, hexagonal und rhomboedrisch.

Kohlenstoffarten, die das Element Kohlenstoff in der allotropen Form des Graphits enthalten, unanhängig von vorhandenen Strukturdefekten (Volumenanteil und Homogenität der kristallinen Domänen), bei denen also eine dreidimensionale kristalline Fernordnung im Material durch Beugungsmethoden nachgewiesen werden kann, werden auch als graphitischer Kohlenstoff bezeichnet.

Nach dieser Nomenklatur (siehe W. Klose et. al., "Terminologie zur Beschreibung von Kohlenstoff als Feststoff", Deutsche Keramische Gesellschaft, Fachausschussbericht Nr. 33, 3. Bericht des Arbeitskreises Kohlenstoff, 2009) ist es gerechtfertigt, die kristallinen Kohlenstoff enthaltende äußerste Schicht der erfindungsgemäßen Interferenzpigmente auch als "Schicht aus graphitischem Kohlenstoff" zu bezeichnen.

Aus den genannten Strukturunterschieden erklären sich auch die zumindest teilweise unterschiedlichen Eigenschaften von Graphen und Graphitkristallen im Vergleich zu üblichen Industrierußen. So weisen erstere beispielsweise eine deutlich größere elektrische Leitfähigkeit als gewöhnlicher partikulärer Industrieruß auf. Dabei ist bei Graphitkristallen das elektrische Leitvermögen parallel und senkrecht zu den einzelnen Kohlenstoffebenen unterschiedlich stark ausgeprägt.

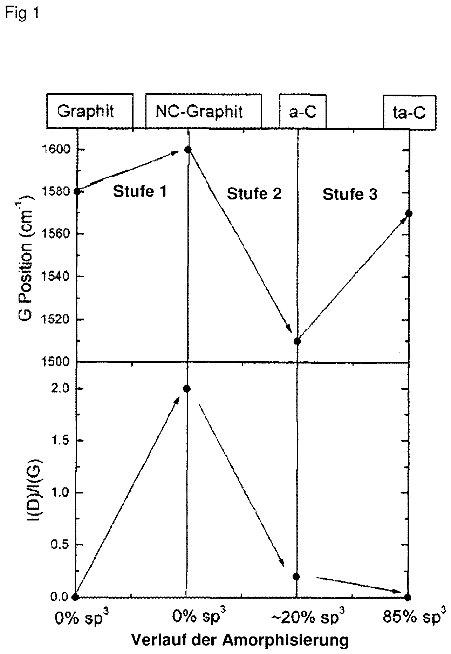

Überraschenderweise ist es nun den Erfindern der vorliegenden Erfindung gelungen, Effektpigmente herzustellen, bei denen das Vorliegen von Graphen bzw. Graphitkristallen in einer im Wesentlichen aus Kohlenstoff bestehenden äußeren Schicht (Schicht aus graphitischem Kohlenstoff) auf einem plättchenförmigen Trägermaterial nachgewiesen werden kann. Das erklärt auch die hohe elektrische Leitfähigkeit der erhaltenen Pigmente, die über die geometrische Schichtdicke der äußersten, kristallinen Kohlenstoff enthaltenden Schicht auf den Trägerpartikeln gezielt eingestellt werden kann. Dabei steigt bereits bei einer sehr geringen geometrischen Schichtdicke von nur wenigen Nanometern die elektrische Leitfähigkeit der erhaltenen Pigmente deutlich an, die sich über einen deutlich verringerten spezifischen Pulverwiderstand der erhaltenen Pigmente bestimmen lässt. Die Charakterisierung der Kohlenstoffschicht erfolgt mittels Raman Spektroskopie. Die Auswertung erfolgt gemäß "Interpretation of Raman spectra of disordered and amorphous carbon, A.C. Ferrari and J. Robertson, University Cambridge, 24.11.1999". Eine Kohlenstoffschicht wird im Wesentlichen mit zwei Peaks beschrieben, welche in den entsprechenden Raman Spektren aufgrund von $sp^2$ hybridisierten Kohlenstoffatomen auftreten. Der G-Peak (Graphite) bei einer Wellenzahl von 1580 bis 1600 $cm^{-1}$ resultiert aus Streckschwingungen von $sp^2$ hybridisierten Kohlenstoffatomen in Ringen und Ketten. Der D-Peak (Disorder) liegt hingegen im einem Wellenzahlbereich von 1360 bis 1400 $cm^{-1}$ und resultiert aus zentrumsymmetrischen Streckschwingungen. In reinem kristallinen Graphit ist diese Schwingung verboten und tritt daher nur in untergeordneten Systemen auf. Wird von dem zu charakterisierenden Material aus dem erhaltenen Raman Spekrum die Wellenzahl der erhaltenen Peaks sowie das Intensitätsverhältnis I(D)/I(G) bestimmt, kann nach dem Diagramm gemäß Figur 1 zwischen Graphit, NC Graphit (nanocrystalline Graphit), a-C (amorphous Carbon) und ta-C (tetrahedal amorphous carbon) unterschieden werden. Auf diese Weise wird das Vorliegen von nanokristallinem Graphit in den erfindungsgemäßen Pigmenten bestätigt.

Als plättchenförmig werden Pigmente oder Trägermaterialien bezeichnet, wenn ihre äußere Form einem flachen Gebilde entspricht, welches mit seiner Ober- und Unterseite zwei annähernd parallel zueinander stehende Oberflächen aufweist, deren Ausdehnung in Länge und Breite die größte Ausdehnung des Pigmentes oder des Trägermaterials darstellt. Der Abstand zwischen den genannten Oberflächen, der die Dicke des Plättchens darstellt, weist dagegen eine geringere Ausdehnung auf.

Die Ausdehnung der Pigmente in Länge und Breite beträgt dabei zwischen 1 und 250 μm, vorzugsweise zwischen 2 und 100 μm, und insbesondere zwischen 5 und 60 μm. Sie stellt auch den Wert dar, der gewöhnlich als die Teilchengröße der Interferenzpigmente bezeichnet wird. Diese ist als solche nicht kritisch, allerdings ist eine enge Teilchengrößenverteilung der erfindungsgemäßen Interferenzpigmente bevorzugt. Besonders bevorzugt ist ein gemäßigt reduzierter Feinanteil. Dabei liegt in einem Pigmentpulver, das aus den erfindungsgemäßen Pigmenten besteht, der Anteil von Partikeln mit einer Teilchengröße unterhalb von 10 μm bei <30 Vol.-%, bezogen auf das Volumen des Pigmentpulvers.

Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA200 (Produkt der Fa. Malvern Instruments Ltd., UK) eingesetzt. Diese Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

Die Dicke der Interferenzpigmente beträgt zwischen 0,05 und 5 μm, insbesondere zwischen 0,3 und 2 μm.

Die erfindungsgemäßen Interferenzpigmente weisen einen Formfaktor (Verhältnis von Länge bzw. Breite zu Dicke) im Bereich von 2:1 bis 500:1 auf, bevorzugt im Bereich von 20:1 bis 200:1, insbesondere von 50:1 bis 100:1.

Als elektrisch leitfähig im Sinne der vorliegenden Erfindung wird ein Pigment dann angesehen, wenn es einen spezifischen Pulverwiderstand im Bereich von höchstens 1 MegaOhm*cm ($1 \times 10^6$ Ohm*cm) aufweist.

Bevorzugt weisen die erfindungsgemäßen Interferenzpigmente einen spezifischen Pulverwiderstand im Bereich von höchstens $1 \times 10^4$ Ohm*cm, insbesondere im Bereich von 10 bis 1000 Ohm*cm, auf. Die hier angegebenen Werte beziehen sich auf Feldstärken von bis zu 10 V/mm, wobei sich die Feldstärke auf die angelegte Meßspannung bezieht.

Die Messung des spezifischen Pulverwiderstandes erfolgt dabei in der Weise, dass in einem Acrylglas-Rohr mit einem Durchmesser von 2 cm eine Menge von jeweils 0,5 g Pigment mit Hilfe eines Gewichts von 10 kg mit einem Metallstempel gegen eine Metallelektrode zusammengepresst wird. An den so verpressten Pigmenten wird der elektrische Widerstand R gemessen. Aus der Schichtdicke L des komprimierten Pigmentes ergibt sich der spezifische Widerstand ρ des Pigmentpulvers gemäß der folgenden Beziehung:

$$\rho = R^* \ \pi^*(d/2)^2/L \ (Ohm^*cm).$$

Unter farbigen Interferenzpigmenten werden solche Effektpigmente verstanden, die auf der Basis mindestens eines plättchenförmigen Trägermaterials und einer oder mehrerer auf diesem befindlichen dünnen Schichten in einem Anwendungsmedium, in dem die Pigmente planar ausgerichtet sind, eingestrahltes Licht durch Interferenzeffekte so verstärken oder abschwächen können, dass mindestens in einem Wellenlängenbereich des sichtbaren Spektrums des Sonnenlichtes eine verstärkte Lichtreflexion durch den nicht mit Hilfsmitteln ausgestatteten Betrachter wahrnehmbar ist. Diese verstärkte, selektive Lichtreflexion wird vom Betrachter als bunte Farbe wahrgenommen. Sie kann durch Absorptionseffekte, die sich aus dem Material des plättchenförmigen Trägers oder der Schichten ergeben, ergänzt oder überlagert werden. Für den Betrachter sichtbar ist im Applikationsmedium mindestens eine Interferenzfarbe, wenn sich das Applikationsmedium auf weißem oder schwarzem Grund befindet.

Es können jedoch auch unter verschiedenen Beleuchtungs- und/oder Betrachtungswinkeln verschiedene Interferenzfarben wahrgenommen werden. In diesem Falle spricht man von optisch variablen Interferenzpigmenten. Optisch variable Pigmente sind solche Pigmente, die unter verschiedenen Beleuchtungs- und/oder Betrachtungswinkeln einen unterschiedlichen visuell wahrnehmbaren Farb- und/oder Helligkeitseindruck hinterlassen. Bei unterschiedlichen Farbeindrücken wird diese Eigenschaft als Farbflop bezeichnet.

Die erfindungsgemäßen Interferenzpigmente weisen entweder unter jedem Beleuchtungs- und/oder Betrachtungswinkel die gleiche Interferenzfarbe oder unter verschiedenen Beleuchtungs- und/oder Betrachtungswinkeln verschiedene Interferenzfarben auf, sie sind also (ein)farbig oder optisch variabel.

Dabei erfolgt die Einstellung der Farbeigenschaften über das Material, die Reihenfolge und die Dicke des Pigmentträgers und/oder der einzelnen Schichten auf dem Träger.

Bei dem plättchenförmigen Träger handelt es sich erfindungsgemäß um natürliche oder synthetische Glimmerplättchen oder $SiO_2$-Plättchen. Die Teilchengröße der Trägerplättchen liegt in demselben Bereich wie die oben angegebenen Teilchengrößen für die erfindungsgemäßen Interferenzpigmente, nämlich im Bereich zwischen 1 und 250 μm, vorzugsweise zwischen 2 und 100 μm, und insbesondere zwischen 5 und 60 μm. Die Dicke dieser Trägerplättchen liegt im Bereich von 0,04 bis 1,5 μm, insbesondere im Bereich von 0,1 bis 1 μm.

Zwischen dem plättchenförmigen Träger und der äußersten, kristallinen Kohlenstoff enthaltenden Schicht liegen eine oder mehrere dielektrische Schichten vor, von denen mindestens eine aus Titandioxid und/oder Titandioxidhydrat zusammengesetzt ist.

Sie kann in einer oder auch in mehreren Schichten zwischen dem plättchenförmigen Träger und der äußersten, kristallinen Kohlenstoff enthaltenden Schicht vorliegen. Die Schichten aus Titandioxid und/oder Titandioxidhydrat können auch alternierend mit Schichten aus Siliziumdioxid aufgebracht werden. In diesem Falle liegt mindestens ein Dreischichtsystem aus $TiO_2$-Schicht/$SiO_2$-Schicht/$TiO_2$-Schicht vor. Die Schichtdicke der Schicht oder der Schichten aus Siliziumdioxid ist nicht besonders limitiert und liegt im Bereich von 1 bis 300 nm, vorzugsweise von 5 bis 200 nm. Ist ein optisch variables Verhalten der resultierenden Interferenzpigmente erwünscht, sollte die geometrische Schichtdicke einer Schicht aus Siliziumdioxid mindestens 30 nm, vorzugsweise mindestens 50 nm betragen.

Die Schichtdicke der Schicht aus Titandioxid und/oder Titandioxidhydrat liegt bei 1 bis 350 nm, insbesondere im Bereich von 20 bis 300 nm. Erfindungsgemäß weist aber mindestens jeweils eine dieser Schichten eine geometrische Schichtdicke von mehr als 70 nm auf. Insbesondere soll die geometrische Schichtdicke mindestens einer dieser Schichten im Bereich von 80 bis 300 nm liegen. Liegt mindestens eine Schicht aus Titandioxid und/oder Titandioxidhydrat mit einer solchen Schichtdicke vor, kann eine bunte Interferenzfarbe der resultierenden erfindungsgemäßen elektrisch leitfähigen Interferenzpigmente gut über die jeweils konkrete Schichtdicke der hochbrechenden Schicht im angegebenen Bereich eingestellt werden.

Optisch variable erfindungsgemäße Pigmente können dagegen erhalten werden, wenn sich zwischen dem plättchenförmigen Träger und der äußersten, kristallinen Kohlenstoff enthaltenden Schicht mehrere dielektrische Schichten befinden, die in der Materialreihenfolge $TiO_2$-Schicht/$SiO_2$-Schicht/$TiO_2$-Schicht aufgebracht sind. Auch bei diesem Schichtaufbau weist mindestens eine der $TiO_2$-Schichten eine geometrische Schichtdicke im oben genannten Bereich auf.

Die dielektrische Schicht aus Titandioxid und/oder Titandioxidhydrat liegt in stöchiometrischer Zusammensetzung, also nicht in reduziertem Zustand, vor.

Erfindungsgemäße elektrisch leitfähige Pigmente sind daher solche, bei denen sich zwischen einem plättchenförmigen Träger und der äußersten, kristallinen Kohlenstoff enthaltenden Schicht eine Schicht aus Titandioxid (Anatas oder Rulilmodifikation) und/oder Titandioxidhydrat (nachfolgend : $TiO_2$-Schicht) befindet oder bei denen sich zwischen dem plättchenförmigen Träger und der äußersten, kristallinen Kohlenstoff enthaltenden Schicht ein Schichtaufbau befindet, der mindestens aus einem Dreischichtsystem aus $TiO_2$-Schicht/$SiO_2$-Schicht/$TiO_2$-Schicht besteht, wobei in allen Fällen die geometrische Schichtdicke mindestens einer der $TiO_2$-Schichten vorzugsweise größer als 70 nm sein sollte.

Es handelt sich dabei um elektrisch leitfähige Interferenzpigmente, bei denen sich auf einem plättchenförmigen Träger aus natürlichem oder synthetischem Glimmer oder $SiO_2$-Plättchen eine Schicht aus Titandioxid (Anatas oder Rulilmodifikation) und/oder Titandioxidhydrat oder mindestens ein Dreischichtsystem aus $TiO_2$-Schicht/$SiO_2$-Schicht/$TiO_2$-Schicht befindet, jeweils gefolgt von einer äußersten, kristallinen Kohlenstoff enthaltenden Schicht.

Die geometrische Schichtdicke mindestens jeweils einer $TiO_2$-Schicht soll dabei mindestens 70 nm betragen und insbesondere im Bereich von 80 bis 300 nm liegen.

Die erfindungsgemäßen elektrisch leitfähigen, farbigen Interferenzpigmente sind semitransparent, das heißt, dass sie im Applikationsmedium bei planarer Ausrichtung nicht nur einen Teil des einfallenden sichtbaren Lichtes transmittieren oder reflektieren, sondern auch einen gewissen Anteil des einfallenden Lichtes im sichtbaren Wellenlängenbereich absorbieren. Dies ist im Wesentlichen dem Absorptionsvermögen der äußersten, kristallinen Kohlenstoff enthaltenden Schicht zuzuschreiben, wenn keine weiteren absorbierenden Materialien im Schichtsystem des Interferenzpigmentes enthalten sind. Es hat sich dabei in überraschender Weise herausgestellt, dass das Absorptionsvermögen der erfindungsgemäßen elektrisch leitfähigen Interferenzpigmente mit dem Grad ihrer elektrischen Leitfähigkeit korreliert. Demzufolge steigt mit wachsender Schichtdicke der äußersten, kristallinen Kohlenstoff enthaltenden Schicht das elektrische Leitvermögen der erfindungsgemäßen Pigmente stetig an.

Bei einer geometrischen Schichtdicke der äußersten, kristallinen Kohlenstoff enthaltenden Schicht im Bereich von 1 bis 5 nm ändert sich dagegen die Interferenzfarbe oder die winkelabhängigen Interferenzfarben sowie der Glanz und die Buntheit, die durch die unterhalb der äußersten, kristallinen Kohlenstoff enthaltenden Schicht liegenden Schichten und das Trägermaterial erzeugt werden, praktisch nicht. Es ändert sich aber mit steigender Schichtdicke der äußersten, kristallinen Kohlenstoff enthaltenden Schicht der $\Delta$L-Wert und damit der Grad des Deckvermögens, der mit den erfindungsgemäßen Pigmenten im Anwendungsmedium erzielt werden kann.

Der $\Delta$L-Wert ist ein Maß für die Transparenz von Interferenzpigmenten. Ist er besonders hoch, handelt es sich um Interferenzpigmente mit hoher Transparenz, die nicht über ein nennenswertes Deckvermögen verfügen, wogegen ein sehr niedriger $\Delta$L-Wert ein Zeichen für Interferenzpigmente mit hohem Deckvermögen ist.

Ob Interferenzpigmente also eher transparent oder eher deckend sind, lässt sich über Helligkeitswerte L* von Beschichtungen, welche die Interferenzpigmente enthalten, auf Schwarz/Weiß-Lackkarten bestimmen. Die Messungen erfolgen im CIEL*a*b*-Farbraum mittels eines geeigneten Messgerätes, beispielsweise mit einem ETA-Farbmessgerät FX11 (Spektrometer der STEAG-ETA Optic GmbH, Inc.) Die Messungen werden im Körperfarbenwinkel 45°/90° (Beleuchtungswinkel 45°, Messwinkel 90°) jeweils über der beschichteten schwarzen und weißen Lackkarte ausgeführt. Die jeweils ermittelten L*-Werte werden in die folgende Gleichung eingefügt:

$$\Delta L = (L^*_{45/90/weiß} - L^*_{45/90/schwarz})$$

(Ermittlung des Deckvermögens DV nach Hofmeister (Colorimetric evaluation of pearlescent pigments, Congress "Mondial Coleur 85", Monte Carlo, 1985 nach der Gleichung DV= 100/($L^*_{45/90/weiß}$ - $L^*_{45/90/schwarz}$)).

(Für die Messungen gemäß der vorliegenden Erfindung wird jeweils eine Pigmentdispersion mit einem Gewichtsanteil von 1,65% Pigment in NC-Acryllack (Merck-Artikel-Nr. 270046) luftblasenfrei präpariert und mit einer 500 $\mu$m Spaltrakel auf eine übliche Schwarz/Weiß-Karte gezogen und getrocknet. Das Pigment ist in der getrockneten Schicht in einer Konzentration von 13 Masseprozent enthalten (PMK: 13%). Die Messung der L*-Werte erfolgt mit einem ETA-Farbmessgerät FX11 der Firma STEGA ETA-Optic GmbH, Inc., bei einem Beleuchtungswinkel von 45° und einem Messwinkel von 90°.)

Die erfindungsgemäßen elektrisch leitfähigen, farbigen Interferenzpigmente weisen $\Delta$L-Werte im Bereich von 10 bis 30 auf, die nach dem vorab beschriebenen Verfahren ermittelt werden. In diesem $\Delta$L-Bereich weisen die erfindungsgemäßen Interferenzpigmente eine hohe elektrische Leitfähigkeit auf, bei der der spezifische Pulverwiderstand der Pigmente kleiner ist als $1x10^6$ Ohm*cm, bevorzugt kleiner als $1x 10^4$ Ohm*cm, und insbesondere im Bereich von 10 bis 1000 Ohm*cm liegt. Diese hohe elektrische Leitfähigkeit kann mit geometrischen Schichtdicken der äußeren, kristallinen Kohlenstoff enthaltenden Schicht auf den Pigmenten erzielt werden, die lediglich im Bereich von 1 bis 5 nm liegen. Der Gewichtsanteil dieser äußersten, kristallinen Kohlenstoff enthaltenden Schicht beträgt dabei 0,5 bis 5 Gew. %, bezogen auf das Gewicht des Pigmentes.

Die erfindungsgemäßen Pigmente, deren $\Delta$L-Werte im Bereich von 10 bis 30 liegen, weisen einen hohen Glanz, eine intensive Interferenzfarbe oder ein optisch variables Farbverhalten bei hoher Buntheit auf und verfügen über ein gutes Deckvermögen, so dass Beschichtungen, die aus Bindemitteln, Lösemitteln und den erfindungsgemäßen Pigmenten auf übliche Schwarz/Weiß-Testlackkarten aufgebracht und getrocknet werden, sowohl auf der weißen wie auf der schwarzen Lackkarte ein hohes sichtbares Deckvermögen aufweisen, welches bei transparenten Interferenzpigmenten, wenn überhaupt, lediglich auf der schwarzen Lackkarte zu verzeichnen ist. Die äußerste, kristallinen Kohlenstoff enthaltende Schicht der Pigmente ist trotz der geringen Schichtdicke stabil und abriebfest und ist kompakt ausgebildet, so dass auch bei mechanischer Beanspruchung der Pigmente nicht mit Qualitätsverlusten gerechnet werden muss.

Gegenstand der vorliegenden Erfindung ist auch ein Verfahren zur Herstellung der genannten elektrisch leitfähigen, farbigen Pigmente, bei dem plättchenförmige Trägerteilchen, welche mit einer oder mehreren Schichten beschichtet sein können, in einem Reaktor in einem Trägergasstrom unter Zufuhr einer gasförmigen, Kohlenstoff haltigen Verbindung durch pyrolytische Zersetzung der Kohlenstoff haltigen Verbindung mit einer äußersten Schicht beschichtet werden, die zu mindestens 95 Gew.%, bezogen auf das Gewicht dieser Schicht, aus Kohlenstoff besteht und kristallinen Kohlenstoff in Form von Graphit und/oder Graphen enthält.

Als partikuläre Ausgangsprodukte für das erfindungsgemäße Verfahren werden die bereits vorab mit einer oder mehreren Schichten beschichteten Trägerpartikel eingesetzt. Dabei kommen alle Träger- und Schichtmaterialien sowie Schichtreihenfolgen in Frage, die vorab bereits beschrieben wurden.

Die bereits vorab beschichteten Träger sind kommerziell verfügbar. Die vorbeschichteten Trägermaterialien, bei denen es sich vorzugsweise um herkömmliche Interferenzpigmente handelt, können von den meisten Herstellern bereits in der entsprechenden Größensortierung bezogen werden. Anderenfalls können auch handelsübliche Interferenzpigmente noch Mahl- und/oder Klassierprozessen unterzogen werden, bevor sie in das erfindungsgemäße Verfahren eingebracht werden.

Die genannten Trägerpartikel können jedoch auch vor der Beschichtung mit der äußersten, kristallinen Kohlenstoff enthaltenden Schicht mittels der üblichen, für Effektpigmente allgemein gebräuchlichen Beschichtungsverfahren mit einer oder mehreren dielektrischen Schichten beschichtet werden. Dabei können sowohl nasschemische als auch CVD, PVD oder Sol/Gel-Verfahren eingesetzt werden, die alle in der Beschichtung von Effektpigmenten gewöhnlicherweise zum Einsatz kommen. Wegen der einfachen Durchführbarkeit des Beschichtungsverfahrens und aus Kostengründen ist jedoch der Einsatz nasschemischer Verfahren mit anorganischen Ausgangsstoffen bevorzugt. Diese werden im Anschluss kurz erläutert. Alle anderen genannten Verfahren sind dem Fachmann ebenso geläufig und bedürfen keiner weiteren Erläuterung.

Die Herstellung von Interferenzpigmenten, die auf einem Träger zumindest mit einer Schicht aus $TiO_2$ beschichtet sind, erfolgt nach den üblichen Verfahren zur Herstellung von Interferenzpigmenten mittels vorzugsweise nasschemischer Verfahren. Diese sind beispielsweise in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben.

Dazu werden die Substratplättchen in Wasser suspendiert. Das Aufbringen einer $TiO_2$-Schicht erfolgt dabei vorzugsweise analog zu dem in US 3,553,001 beschriebenen Verfahren. Dabei wird eine wässrige Titansalzlösung langsam zu einer Suspension des zu beschichtenden Pigmentes gegeben, die Suspension auf 50 bis 100 °C erhitzt und der pH-Wert im Bereich von 0,5 bis 5,0 durch gleichzeitige Zugabe einer Base, beispielsweise einer wässrigen Ammoniumhydroxidlösung oder einer wässrigen Alkalihydroxidlösung, nahezu konstant gehalten. Wenn die gewünschte $TiO_2$-Schichtdicke auf den Pigmentplättchen erreicht ist, wird die Zugabe der Titansalzlösung und der Base gestoppt. Da die Zugabe der Titansalzlösung so langsam erfolgt, dass eine quasi vollständige Abscheidung des Hydrolyseproduktes auf den Pigmentplättchen erfolgt, kommt es praktisch nicht zu Nebenfällungen. Das Verfahren ist als Titrationsverfahren bekannt.

Falls auch Schichten aus niedrig brechenden Materialien aufgebracht werden sollen, wird hier beispielhaft das Aufbringen einer $SiO_2$-Schicht erläutert:

Für die Aufbringung einer $SiO_2$-Schicht wird in der Regel eine Natrium-oder Kaliumwasserglaslösung eingesetzt. Die Ausfällung einer Siliziumdioxid- bzw. Siliziumdioxidhydratschicht erfolgt bei einem pH-Wert im Bereich von 6 bis 10, vorzugsweise von 7 bis 9.

Die Aufarbeitung der beschichteten Trägerteilchen erfolgt wie üblich für Interferenzpigmente in der Regel durch Waschen, Trocknen und vorzugsweise auch Kalzinieren der beschichteten Trägerteilchen. Erforderlichenfalls können sich Mahl- und/oder Klassierschritte anschließen.

Die vorab beschichteten plättchenförmigen Trägerteilchen werden dann in den Reaktor eingebracht.

Als Reaktoren, in denen das erfindungsgemäße Verfahren durchgeführt werden kann, sind sowohl Drehrohröfen als auch Wirbelbettreaktoren geeignet, wobei die letzteren bevorzugt eingesetzt werden. Das Beschichtungsverfahren wird in einem Trägergasstrom durchgeführt. Als Trägergas werden Inertgase, synthetische Luft oder Formiergas eingesetzt. Beispielhaft für Inertgase können Stickstoff und Argon genannt werden, wobei Stickstoff bevorzugt eingesetzt wird.

Dem Trägergas wird eine gasförmige, Kohlenstoff haltige Verbindung zugeführt. Diese besteht aus leicht verdampfbaren Kohlenwasserstoffen, die neben Kohlenstoff lediglich Wasserstoff sowie gegebenenfalls auch Sauerstoff enthalten. Als Beispiele können Aceton oder 2-Methyl-3-butinol-2 genannt werden, wobei Aceton insbesondere bevorzugt ist. Das Trägergas kann jedoch auch selbst aus der gasförmigen, Kohlenstoff haltigen Verbindung bestehen, die in diesem Falle sowohl die Funktion des Trägergases als auch die der gasförmigen, Kohlenstoff haltigen Verbindung übernimmt.

Für den Erfolg des erfindungsgemäßen Verfahren ist es von besonderer Bedeutung, dass die plättchenförmigen Trägerteilchen in dem Reaktor während der Reaktion in Bewegung sind und in Bewegung gehalten werden. Dazu müssen die plättchenförmigen Trägerteilchen während der Reaktion hinreiched fluidisiert werden. Falls die Fluidisierung der Trägerteilchen durch den Trägergasstrom und die gasförmige, Kohlenstoff haltige Verbindung nicht ausreichen sollte, sind daher geeignete Verwirbelungsapparaturen wie Vibrations- und/oder Rüttelvorrichtungen einzusetzen.

Im Anschluss an eine ausreichende Fluidisierung der plättchenförmigen Trägerteilchen im Reaktor wird die Reaktionstemperatur eingestellt. Die Temperatur während des Beschichtungsverfahrens wird im Reaktor so eingestellt, dass die Kohlenstoff haltige, gasförmige Verbindung pyrolytisch zersetzt wird. Sie liegt erfindungsgemäß im Bereich von 500°C bis 700°C und wird abhängig von der Art der zu zersetzenden, Kohlenstoff haltigen Verbindung eingestellt.

Die gasförmige, Kohlenstoff haltige Verbindung kann dem Reaktor wahlweise vor oder nach Erreichung der Reaktionstemperatur oder während der Einstellung der Reaktionstemperatur zugeführt werden. Bevorzugt ist eine Zufuhr vor dem Erreichen der erforderlichen Reaktionstemperatur. Insbesondere bevorzugt ist es, wenn die gasförmige, Kohlenstoff haltige Verbindung und das Trägergas vor der Zufuhr in den Reaktor bereits in einem geeigneten Verhältnis als Gemisch vorliegen und dem Reaktor gemeinsam zugeführt werden. Die Stoffmenge an zugeführter Kohlenstoff haltiger Verbindung kann dabei über die Temperatur und/oder den Dampfdruck der entsprechenden gasförmigen Verbindung gesteuert werden. Nach Beendigung der pyrolytischen Reaktion und Erreichen der gewünschten Schichtdicke der äußersten Schicht wird die Kohlenstoffquelle abgestellt.

Die Reaktionszeit beträgt etwa 5 bis 200 Minuten, vorzugsweise 10 bis 150 Minuten. Innerhalb dieser Reaktionszeit wird auf den eingesetzten, plättchenförmigen Trägerteilchen eine kompakte, geschlossene äußerste Schicht aufgebracht, die zu mindestens 95 Gew.%, vorzugsweise mindestens 98 Gew. %, bezogen auf das Gewicht dieser Schicht, aus Kohlenstoff besteht und kristallinen Kohlenstoff in Form von Graphen und/oder Graphit enthält. Die Schichtdicke dieser Schicht wächst während der Reaktion stetig an und kann durch die gewählte Dauer der Reaktion gesteuert werden. Mit der Schichtdicke der äußersten Schicht steigt die elektrische Leitfähigkeit sowie das Deckvermögen der resultierenden Pigmente an.

Da bei Schichtdicken der äußersten Schicht von größer als 5 nm sowohl der Glanz als auch die Buntheit der resultierenden Pigmente in Mitleidenschaft gezogen wird, wird die geometrische Schichtdicke der äußersten, kristallinen Kohlenstoff enthaltenden Schicht im erfindungsgemäßen Verfahren vorzugsweise auf Werte im Bereich von lediglich 1 bis 5 nm eingestellt.

Nach der thermischen Behandlung werden die erhaltenen Interferenzpigmente abgekühlt und klassiert. Falls erforderlich, können vor oder nach dem Klassieren auch noch ein oder mehrere Mahlprozesse zur weiteren Vereinzelung der erhaltenen Pigmente durchgeführt werden.

Das erfindungsgemäße Verfahren kann sowohl im Batchverfahren als auch als kontinuierliches Verfahren durchgeführt werden. Es ermöglicht darüber hinaus einen hohen Durchsatz von Pigmenten in einer kurzen Zeitspanne und ist daher auch in ökonomischer Hinsicht attraktiv.

Gegenstand der vorliegenden Erfindung ist auch die Verwendung der vorab beschriebenen, erfindungsgemäßen Pigmente in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten und Pigmentpräparationen.

Bedingt durch ihre hohe Interferenzfarbstärke, das gegebenenfalls vorhandene optisch variable Verhalten und das vergleichsweise hohe Deckvermögen sind die erfindungsgemäßen Pigmente gut geeignet, lediglich auf Grund ihrer Farbeigenschaften zur Pigmentierung von Anwendungsmedien der vorab genannten Art eingesetzt zu werden. Dabei werden sie in der gleichen Weise wie übliche Interferenzpigmente eingesetzt. Besonders vorteilhaft ist jedoch, dass sie neben den attraktiven Farbeigenschaften auch über eine hohe elektrische Leitfähigkeit verfügen, die sie insbesondere für den Einsatz in technischen Anwendungen, die elektrisch leitfähige Beschichtungen erfordern, geeignet machen. So eignen sie sich insbesondere für die Herstellung bunter, elektrisch leitfähiger Beschichtungen auf verschiedenen Untergründen, die mittels Lackier- oder Druckverfahren oder anderer üblicher Beschichtungsverfahren hergestellt werden können. Da die erfindungsgemäßen Pigmente auch in dünnen Beschichtungen noch eine gute elektrische Leitfähigkeit aufweisen, können damit dünne Beschichtungen mit hohem Glanz, hoher Buntheit und gutem Deckvermögen erhalten werden, die darüber hinaus elektrisch leitfähig sind. Damit können für leitfähige Pigmente Einsatzmöglichkeiten gefunden werden, die mit den bisher zur Verfügung stehenden Pigmenten des Standes der Technik nicht zugänglich waren, beispielsweise farbige Lack- und Druckschichten mit Widerständen im antistatischen bis elektrisch ableitfähigen Bereich, also im Bereich von $10^9$ Ohm bis $10^6$ Ohm, gemessen als spezifischer Oberflächenwiderstand der entsprechenden Lack- oder Druckschicht.

Gut geeignet sind die erfindungsgemäßen Pigmente auch in Sicherheitsanwendungen, insbesondere im Sicherheitsdruck. Sie können dort zur Erzeugung verdeckter Sicherheitsmerkmale eingesetzt werden, die mit bloßem Auge unsichtbar sind, aber mit entsprechenden Detektoren ausgelesen werden können. So lassen sich mit Hilfe der erfindungsgemäßen Pigmente Druckfarben herstellen, die Druckbilder mit bunten Interferenzfarben und guter elektrischer Leitfähigkeit ergeben. Dabei kann bereits die elektrische Leitfähigkeit als unsichtbares Sicherheitsmerkmal dienen. Besonders gut geeignet sind die erfindungsgemäßen Pigmente jedoch zur Herstellung von Druckbildern, die teilweise mit den erfindungsgemäßen Pigmenten, teilweise mit nicht elektrisch leitfähigen Pigmenten oder Pigmentgemischen gleicher Farbstellung bedruckt werden. Solche Druckbilder ergeben einen einheitlichen Farbeindruck, sind jedoch in Teilbereichen elektrisch leitfähig und in anderen Teilbereichen nicht elektrisch leitfähig, was als verstecktes Sicherheitsmerkmal genutzt werden kann, das über die elektrischen Eigenschaften oder über Wärmebilder ausgelesen werden kann.

Sicherheitsprodukte sind beispielsweise Banknoten, Schecks, Kreditkarten, Aktien, Pässe, Ausweisdokumente, Führerscheine, Eintrittskarten, Wertmarken, Steuermarken etc., um nur einige zu nennen. Diese können beispielsweise mit Barcodes, 2D-Datamatrixcodes, alphanumerischen Zeichen oder Logos versehen sein, die die elektrisch leitfähigen, farbigen Interferenzpigmente gemäß der vorliegenden Erfindung enthalten.

Beim Einsatz der Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Melaminharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft zur Herstellung von elektrisch leitfähigen Kunststoffen und Folien eingesetzt werden, und zwar für alle dem Fachmann bekannten Anwendungen, die eine elektrische Leitfähigkeit erfordern. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente. Besonderheiten der Einbringung in Kunststoffe sind daher beispielsweise in R. Glausch, M. Kieser, R. Maisch, G. Pfaff, J. Weitzel, Perlglanzpigmente, Curt Vincentz Verlag, 1996, 83 ff., beschrieben.

Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel, Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

Bedingt durch ihre elektrisch leitenden und Farbeigenschaften lassen sich die erfindungsgemäßen Interferenzpigmente mit besonderem Vorteil beispielsweise in antistatisch ausgerüsteten dekorativen Oberflächen einsetzen. Neben den durch den Herstellungsprozess gut steuerbaren elektrischen Eigenschaften sind die erfindungsgemäßen Interferenzpigmente von gutem Deckvermögen, von hoher Interferenzfarbstärke und zeigen gegebenenfalls ein optisch variables Verhalten, so dass sie zur Farbgebung für ansonsten transparente, dielektrische Schichten in den vorab beschriebenen Anwendungsbereichen optimal verwendbar sind und nicht mit absorbierenden Farbmitteln oder anderen Effektpigmenten gemischt werden müssen, um dem Anwendungsmedium neben den leitenden Eigenschaften auch eine ansprechende Farbgebung des Anwendungsmediums zu verleihen.

Die erfindungsgemäßen Interferenzpigmente eignen sich auch in besonderer Weise zur Lasermarkierung. Wenn sie Lacken, Drucken oder Kunststoffartikeln zugefügt werden, kann die äußerste, kristallinen Kohlenstoff enthaltende Schicht auf den Pigmenten durch Laserbeschuss ganz oder teilweise entfernt oder in $CO_2$ überführt werden, wodurch im Anwendungsmedium bunte, attraktive Lasermarkierungen erhalten werden.

Die Konzentration der erfindungsgemäßen Interferenzpigmente im jeweiligen Anwendungsmedium ist von den dort gewünschten Eigenschaften bezüglich Farbgebung und elektrischer Leitfähigkeit abhängig und kann vom Fachmann jeweils auf der Basis üblicher Rezepturen gewählt werden.

Obwohl die erfindungsgemäßen Interferenzpigmente über attraktive optische und elektrisch leitende Eigenschaften verfügen und damit als alleinige Effektpigmente in verschiedensten Anwendungen einsetzbar sind, ist es selbstverständlich möglich und je nach Anwendungszweck auch vorteilhaft, sie bei Bedarf mit organischen und/oder anorganischen Farbmitteln (insbesondere mit Weiß- oder Buntpigmenten) und/oder anderen, elektrisch leitfähigen Materialien und/oder anderen, nicht elektrisch leitfähigen Effektpigmenten zu mischen oder gemeinsam mit diesen in einer Anwendung, beispielsweise einer Beschichtung, einzusetzen.

Darüber hinaus können sie auch untereinander in verschiedenen Farbstellungen oder mit unterschiedlich eingestellter elektrischer Leitfähigkeit gemischt werden, wenn sich daraus für die Anwendung Vorteile ergeben. Die Mischungsverhältnisse bei allen vorab beschriebenen Mischungen sind nicht limitiert, solange die vorteilhaften Eigenschaften der erfindungsgemäßen Pigmente durch die zugemischten Fremdpigmente nicht negativ beeinflusst werden. Die erfindungsgemäßen Pigmente können in jedem Verhältnis mit anwendungsüblichen Zusatzstoffen, Füllstoffen und/oder Bindemittelsystemen gemischt werden.

Die erfindungsgemäßen Pigmente weisen attraktive bunte Interferenzfarben von hoher Farbstärke, gegebenenfalls ein optisch variables Verhalten sowie ein hohes Deckvermögen bei gleichzeitiger Semitransparenz auf und verfügen über gute elektrisch leitende Eigenschaften. Neben üblichen Anwendungen leitfähiger Pigmente eignen sie sich daher insbesondere für die Erzeugung von Sicherheitsmerkmalen in Sicherheitsanwendungen und zur Lasermarkierung.

Fig.1: zeigt ein Diagramm zur Charakterisierung von Kohlenstoff mit Hilfe der Raman Spektroskopie nach A.C. Ferrari und J. Robertson, Universität Cambridge

Fig. 2: zeigt ein Diagramm zur Verdeutlichung der Beziehung von spezifischem Pulverwiderstand und ∆L für ein Pigment gemäß Beispiel 1

Fig. 3: zeigt zeigt ein Diagramm zur Verdeutlichung der Beziehung von spezifischem Oberflächenwiderstand einer Lackschicht und ∆L für ein Pigment gemäß Beispiel 3

Die vorliegende Erfindung soll nachfolgend an Hand von Beispielen erläutert, aber nicht auf diese beschränkt werden.

Beispiele:

Beispiel 1:

In allen Erfindungsbeispielen wird eine Wirbelbettapparatur als Reaktor verwendet, die einen senkrechten, zylinderförmigen Reaktionsraum umfasst, welcher am unteren Ende mit einem Anströmboden und am oberen Ende mit einem Filtersystem zur Zurückhaltung der Pigmente ausgerüstet ist. Die Wirbelbettapparatur ist temperierbar und mit einer Vibrationsvorrichtung versehen. Die Fluidisierung der Pigmente erfolgt über die Anströmung der Pigmentschüttung mit einem Trägergas sowie bei Bedarf zusätzlich über den Einsatz der Vibrationsvorrichtung. Die Reaktionstemperatur liegt jeweils im Bereich von 500°C bis 700°C. Die verdampfbare Kohlenstoff enthaltende Verbindung (Kohlenstoff Precursor) wird dem Reaktor in einer Mischung mit dem Trägergas zugeführt. Die Reaktionszeit beträgt zwischen 30 und 120 Minuten.

500 g eines Interferenzpigmentes mit roter Interferenzfarbe (Iriodin® 7215 Ultra Red, Teilchengröße 10-60 $\mu$m, $d_{50}$ ca. 25 $\mu$m, volumengewichtet, $TiO_2$ auf Glimmer, Merck KGaA, Deutschland) werden in der Wirbelbettapparatur vorgelegt. Das Trägergas Stickstoff wird durch eine Gaswaschflasche mit Aceton geleitet und auf diese Weise mit Aceton gesättigt. Das gasförmige Stickstoff/Aceton-Gemisch wird in die Wirbelbettapparatur geleitet und die Pigmente werden durch den Trägergasstrom sowie bei Bedarf durch Zuschalten der Vibrationsvorrichtung fluidisiert. Nach dem Erreichen der Reaktionstemperatur im Bereich von 500°C bis 700°C werden in mehreren Ansätzen nach Reaktionszeiten von 30, 60, 90 und 120 Minuten die erhaltenen Pigmente entnommen und auf ihren Kohlenstoffanteil, den spezifischen Pulverwiderstand sowie den ΔL-Wert hin untersucht. Das Ergebnis ist in Tabelle 1 dargestellt:

Tabelle 1:

| T (Reaktionszeit) [min] | spez. Pulverwiderstand [Ohm*cm] | Massenanteil C [%] | ΔL-Wert |
|---|---|---|---|
| 0 | > $10^9$ | 0,0 | 50,9 |
| 30 | 1132,5 | 0,6 | 23,4 |
| 60 | 815,7 | 0,8 | 22,8 |
| 90 | 185,8 | 1,0 | 19,0 |
| 120 | 54,5 | 1,3 | 14,7 |

Alle mittels Raman Spektroskopie untersuchten Proben von Pigmenten gemäß Beispiel 1 (30, 60, 90 und 120 min. Reaktionszeit) bestätigen das Vorhandensein von nanokristallinem Kohlenstoff in der äußersten Schicht. Die erhaltenen Pigmente zeigen eine rote Interferenzfarbe, einen hohen Glanz und mit zunehmendem Kohlenstoffanteil ein steigendes Deckvermögen.

Beispiel 2:

500 g eines Interferenzpigmentes mit blauer Interferenzfarbe (Iriodin® 7225 Ultra Blue, Teilchengröße 10-60 μm, $TiO_2$ auf Glimmer, Merck KGaA, Deutschland) werden in der Wirbelbettapparatur vorgelegt. Das Trägergas Stickstoff wird durch eine im Bereich von 30 bis 90°C temperierte Gaswaschflasche mit 2-Methyl-3-butin-2-ol geleitet und auf diese Weise mit letzterem angereichert. Das gasförmige Stickstoff/2-Methyl-3-butin-2-ol Gemisch wird in die Wirbelbettapparatur geleitet und die Pigmente werden durch den Trägergasstrom sowie bei Bedarf durch Zuschalten der Vibrationsvorrichtung fluidisiert. Die Reaktionstemperatur wird auf 500°C bis 700°C eingestellt. Es werden Pigmentproben vor Beginn der Reaktion und nach 120 Minuten entnommen und auf ihren Kohlenstoffanteil, den spezifischen Pulverwiderstand sowie den ΔL-Wert hin untersucht. Das Ergebnis ist in Tabelle 2 dargestellt:

Tabelle 2:

| T (Reaktionszeit) [min] | spez. Pulverwiderstand [Ohm*cm] | Massenanteil C [%] | ΔL-Wert |
|---|---|---|---|
| 0 | > $10^9$ | 0,0 | 61,3 |
| 120 | 62,4 | 2,9 | 14,7 |

Die mittels Raman Spektroskopie untersuchten Proben von Pigmenten gemäß Beispiel 2 (120 min. Reaktionszeit) bestätigen das Vorhandensein von nanokristallinem Kohlenstoff in der äußersten Schicht.
Die erhaltenen Pigmente zeigen eine blaue Interferenzfarbe, einen hohen Glanz und ein vergleichsweise hohes Deckvermögen bei vorhandener Semitransparenz.

Beispiel 3:

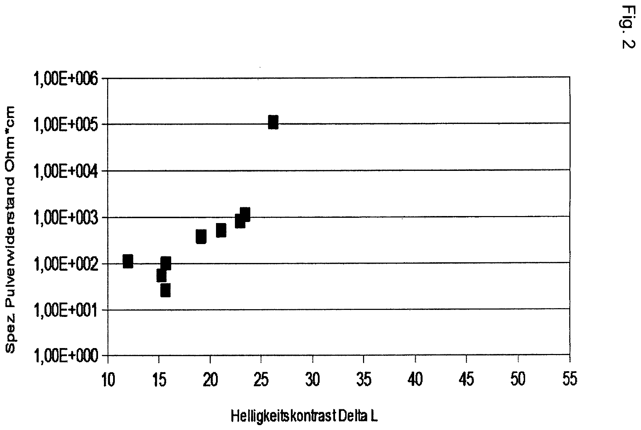

Jeweils 1 kg des roten Interferenzpigmentes gemäß Beispiel 1 werden nach dem in Beispiel 1 beschriebenen Verfahren bei verschiedenen Reaktionszeiten mit einer kristallinen Kohlenstoff haltigen Schicht beschichtet. Es werden Pigmente mit einem Kohlenstoffgehalt zwischen 0,5 und 2,3 Gew.%, bezogen auf das Gewicht des eingesetzten Interferenzpigmentes (ohne Kohlenstoffschicht), erhalten.
Die Kohlenstoffschichten werden durch TEM-Aufnahmen, Elementaranalyse, Thermodifferentialanalyse und Ramanspektroskopie charakterisiert. In den TEM-Aufnahmen sind geschlossene Kohlenstoffschichten mit einer Dicke von 1-3 nm, was etwa 3-9 Graphitlagen entspricht, auf der Oberfläche der Pigmente zu erkennen. Die Ramanspektren zeigen das Vorliegen von im Wesentlichen graphitischem Kohlenstoff. Es werden zusätzlich die spezifischen Pulverwiderstände der Pigmente sowie die koloristischen Werte anhand von Schwarz/Weiß-Lackkarten bestimmt.
Die Abhängigkeit des spezifischen Pulverwiderstandes vom Helligkeitskontrast ΔL der Pigmente ist in Figur 2 dargestellt. Die Abbildung zeigt das Vorliegen eines spezifischen Pulverwiderstandes im Bereich von < $1 \times 10^6$ Ohm*cm, vorzugsweise von < $1 \times 10^4$ Ohm*cm, bei ΔL-Werten der Pigmente im Bereich von 10 bis 30.

Beispiel 4:

Anwendungsbeispiel:

Die Pigmente gemäß Beispiel 3 werden in NC-Lack dispergiert (12 % Collodium/Butylacrylat in einem Lösemittelgemisch). Mit der jeweiligen Lackzubereitung werden PET-Folien beschichtet. Die Pigmentmassekonzentration (PMK) der Pigmente in der trockenen Lackschicht beträgt 42 %, die Schichtdicke der Lackschicht 40 $\mu$m. Nach Trocknung der Lackschichten wird mit Hilfe einer Federzungenelektrode (1 cm Elektrodenabstand, Länge 10 cm) der jeweilige Oberflächenwiderstand der Lackschicht bei einer Feldstärke von 100 V/cm gemessen.

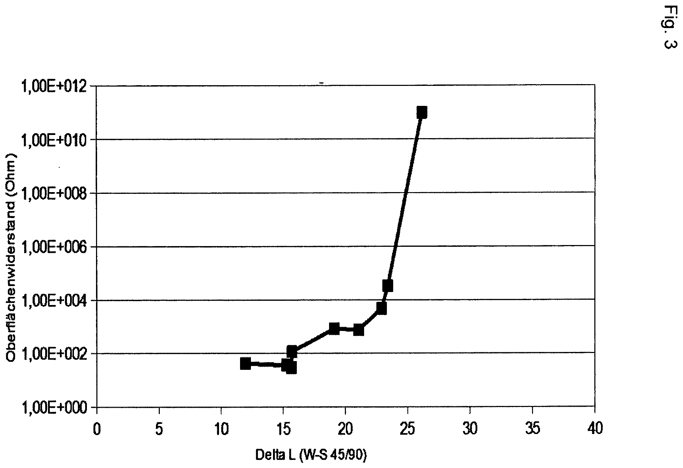

Die Ergebnisse sind in Figur 3 dargestellt. Die Ergebnisse zeigen, dass mit den erfindungsgemäßen Pigmenten sowohl optisch attraktive als auch elektrisch leitfähige Lackierungen erhalten werden. Durch Erhöhung der Pigmentmassekonzentration lässt sich auch mit dem am wenigsten leitfähigen Pigment noch eine elektrische Leitfähigkeit im antistatischen Bereich (< $10^9$ Ohm) erreichen, während die PMK der sehr gut leitfähigen Pigmente für dieses Ziel auch weiter abgesenkt werden kann. Gleichfarbige Lackschichten, die durch Abmischung von Iriodin® 7215 Ultra Red mit Carbon Black erhalten werden können, würden dagegen keinerlei elektrische Leitfähigkeit aufweisen.

Vergleichsbeispiel 1:

Es werden Mischungen des roten Interferenzpigmentes aus Beispiel 1 (Iriodin® 7215 Ultra Red) mit Carbon Black (Printex L der Fa. Orion Engineered Carbons, Inc.) in der Weise angefertigt, dass die Mischung jeweils den in Tabelle 3 dargestellten Kohlenstoffgehalt aufweist. Von den erhaltenen Mischungen wird jeweils der spezifische Pulverwiderstand gemessen. Außerdem werden Schwarz/Weiß-Lackkarten mit einer Beschichtung versehen, die außer Bindemittel und Lösemittel lediglich das entsprechende Pigmentgemisch enthält. Von den getrockneten Beschichtungen werden die $\Delta$L-Werte wie vorab beschrieben bestimmt.

Tabelle 3:

| spez. Pulverwiderstand [Ohm*cm] | Massenanteil Carbon Black [%] | $\Delta$L-Wert |
|---|---|---|
| > $10^9$ | 0,0 | 50,9 |
| > $10^9$ | 0,5 | 12,5 |
| > $10^9$ | 1,0 | 9,8 |
| > $10^9$ | 1,5 | 6,3 |
| > $10^9$ | 2,0 | 5,0 |
| > $10^9$ | 2,5 | 4,3 |

Mit den Carbon Black/Interferenzpigment-Mischungen kann der gewünschte spezifische Pulverwiderstand von kleiner als 1x$10^6$ Ohm*cm nicht erreicht werden. Außerdem zeigen die Abmischungen in der Lackanwendung einen bereits bei geringsten Zugabemengen an Carbon Black sehr stark reduzierten $\Delta$L-Wert, der sich nicht gezielt über die Zugabemenge an Carbon Black einstellen lässt.

Vergleichsbeispiel 2:

Aus dem Stand der Technik sind Kohlenstoff haltige Beschichtungen auf Effektpigmenten, u. a. auf Interferenzpigmenten bekannt, die durch Zersetzung polymerer Beschichtungen auf der Oberfläche von Interferenzpigmenten erhalten werden.

Als Vergleich werden daher 50 g Iriodin® 7215 Ultra Red (siehe Beispiel 1) mit 10 g Furfurylalkohol innig vermischt. Durch Zugabe von Salzsäure wird anschließend die Polymerisation von Furfurylalkohol initiiert. Es wird ein Interferenzpigment mit einer äußersten Schicht aus Polyfurfurylalkohol erhalten. Das Pigmentpulver wird anschließend unter Inertgas bei einer Temperatur im Bereich von 500°C bis 800°C pyrolysiert. Das erhaltene dunkle Pigment weist einen Masseanteil an Kohlenstoff von 5,8 % und einen spezifischen Pulverwiderstand von 6,3 x $10^6$ Ohm*cm auf. Der aus den Beschichtungen von Schwarz/Weiß-Lackkarten ermittelte $\Delta$L-Wert beträgt 5,3.

**Patentansprüche**

1. Elektrisch leitfähige, farbige Interferenzpigmente auf der Basis eines plättchenförmigen Trägers, wobei es sich bei dem plättchenförmigen Träger um natürliche oder synthetische Glimmerplättchen oder $SiO_2$-Plättchen handelt und

der Träger eine Beschichtung aus einer oder mehreren Schichten aufweist und wobei die am weitesten von Träger entfernte, äußerste Schicht zu mindestens 95 Gew.%, bezogen auf das Gewicht dieser Schicht, aus Kohlenstoff besteht und kristallinen Kohlenstoff in Form von Graphit und/oder Graphen enthält und eine sich unterhalb dieser äußersten Schicht befindliche Schicht oder sich unterhalb dieser äußersten Schicht befindliche Schichten umhüllt sowie eine geometrische Schichtdicke im Bereich von 1-5 nm aufweist, wobei die Interferenzpigmente zwischen dem plättchenförmigen Träger und der äußersten, kristallinen Kohlenstoff enthaltenden Schicht eine Schicht aus Titandioxid und/oder Titandioxidhydrat oder mindestens ein Dreischichtsystem aus $TiO_2$-Schicht/$SiO_2$-Schicht/$TiO_2$-Schicht aufweisen und die geometrische Schichtdicke mindestens jeweils einer $TiO_2$-Schicht mindestens 70 nm beträgt, wobei die elektrisch leitfähigen Interferenzpigmente einen spezifischen Pulverwiderstand von kleiner als $1x10^6$ Ohm*cm aufweisen.

2. Interferenzpigmente gemäß Anspruch 1, **dadurch gekennzeichnet, dass** die äußerste, kristallinen Kohlenstoff enthaltende Schicht zu mindestens 98 Gew.% aus Kohlenstoff besteht.

3. Interferenzpigmente gemäß den Ansprüchen 1 oder 2, **dadurch gekennzeichnet, dass** der Anteil der äußersten, kristallinen Kohlenstoff enthaltenden Schicht, bezogen auf das Gewicht des Pigmentes, 0,5 bis 5 Gew.-% beträgt.

4. Interferenzpigmente gemäß einem oder mehreren der Ansprüche 1 bis 3, **dadurch gekennzeichnet, dass** sie eine Teilchengröße im Bereich von 1 bis 250 $\mu$m aufweisen, und wobei in einem aus den Interferenzpigmenten bestehenden Pigmentpulver Interferenzpigmente mit einer Teilchengröße von kleiner als 10 $\mu$m mit einem prozentualen Volumenanteil von höchstens 30 % vorliegen.

5. Interferenzpigmente gemäß einem oder mehreren der Ansprüche 1 bis 4, **dadurch gekennzeichnet, dass** der spezifische Pulverwiderstand kleiner als $1x 10^4$ Ohm*cm ist.

6. Verfahren zur Herstellung von elektrisch leitfähigen, farbigen Interferenzpigmenten gemäß einem oder mehreren der Ansprüche 1 bis 5, wobei plättchenförmige Trägerteilchen, bei denen es sich um natürliche oder synthetische Glimmerplättchen oder $SiO_2$-Plättchen handelt, welche mit einer oder mehreren Schichten beschichtet sind, wobei es sich um eine Schicht aus Titandioxid und/oder Titandioxidhydrat oder mindestens ein Dreischichtsystem aus $TiO_2$-Schicht/$SiO_2$-Schicht/$TiO_2$-Schicht handelt, in einem Reaktor in einem Trägergasstrom unter Zufuhr einer gasförmigen, Kohlenstoff haltigen Verbindung durch pyrolytische Zersetzung der Kohlenstoff haltigen Verbindung bei einer Temperatur im Bereich von 500°C bis 700°C mit einer äußersten Schicht beschichtet werden, die zu mindestens 95 Gew.%, bezogen auf das Gewicht dieser Schicht, aus Kohlenstoff besteht und kristallinen Kohlenstoff in Form von Graphit und/oder Graphen enthält, wobei die äußerste, kristallinen Kohlenstoff enthaltende Schicht mit einer geometrischen Schichtdicke im Bereich von 1 bis 5 nm aufgebracht wird, als gasförmige, Kohlenstoff enthaltende Verbindung Aceton oder 2-Methyl-3-butinol-2 eingesetzt wird und die elektrisch leitfähigen Interferenzpigmente einen spezifischen Pulverwiderstand von kleiner als $1x10^6$ Ohm*cm aufweisen.

7. Verfahren gemäß Anspruch 6, **dadurch gekennzeichnet, dass** die plättchenförmigen Trägerteilchen in dem Reaktor in Bewegung gehalten werden.

8. Verwendung von elektrisch leitfähigen, farbigen Interferenzpigmenten gemäß einem oder mehreren der Ansprüche 1 bis 5 in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten oder Pigmentpräparationen.

**Claims**

1. Electrically conductive, coloured interference pigments based on a flake-form support, where the flake-form support comprises natural or synthetic mica flakes or $SiO_2$ flakes and the support has a coating comprising one or more layers and where the outermost layer furthest away from the support consists of at least 95% by weight, based on the weight of this layer, of carbon and comprises crystalline carbon in the form of graphite and/or graphene and surrounds a layer located beneath this outermost layer or layers located beneath this outermost layer and has a geometrical layer thickness in the range 1-5 nm, where the interference pigments have a layer comprising titanium dioxide and/or titanium dioxide hydrate or at least one three-layer system comprising $TiO_2$ layer/$SiO_2$ layer/$TiO_2$ layer between the flake-form support and the outermost layer comprising crystalline carbon, and the geometrical layer thickness of at least in each case one $TiO_2$ layer is at least 70 nm, where the electrically conductive interference pigments have a specific powder resistance of less than $1\times10^6$ ohm*cm.

2. Interference pigments according to Claim 1, **characterised in that** the outermost layer comprising crystalline carbon consists of at least 98% by weight of carbon.

3. Interference pigments according to Claim 1 or 2, **characterised in that** the proportion of the outermost layer comprising crystalline carbon, based on the weight of the pigment, is 0.5 to 5% by weight.

4. Interference pigments according to one or more of Claims 1 to 3, **characterised in that** they have a particle size in the range from 1 to 250 $\mu$m, and where interference pigments having a particle size of less than 10 $\mu$m are present with a percentage proportion by volume of at most 30% in a pigment powder consisting of the interference pigments.

5. Interference pigments according to one or more of Claims 1 to 4, **characterised in that** the specific powder resistance is less than $1\times10^4$ ohm*cm.

6. Process for the preparation of electrically conductive, coloured interference pigments according to one or more of Claims 1 to 5, in which flake-form support particles, which are natural or synthetic mica flakes or $SiO_2$ flakes which have been coated with one or more layers, where the coating comprises a layer of titanium dioxide and/or titanium dioxide hydrate or at least one three-layer system comprising $TiO_2$ layer/$SiO_2$ layer/$TiO_2$ layer, are coated with an outermost layer which consists of at least 95% by weight, based on the weight of this layer, of carbon and comprises crystalline carbon in the form of graphite and/or graphene, in a reactor in a stream of carrier gas with feed of a gaseous, carbon-containing compound by pyrolytic decomposition of the carbon-containing compound at a temperature in the range from 500°C to 700°C, where the outermost layer comprising crystalline carbon is applied with a geometrical layer thickness in the range from 1 to 5 nm, the gaseous, carbon-containing compound employed is acetone or 2-methyl-3-butyn-2-ol and the electrically conductive interference pigments have a specific powder resistance of less than $1\times10^6$ ohm*cm.

7. Process according to Claim 6, **characterised in that** the flake-form support particles are kept in motion in the reactor.

8. Use of electrically conductive, coloured interference pigments according to one or more of Claims 1 to 5 in paints, coatings, printing inks, coating compositions, security applications, plastics, ceramic materials, glasses, paper, films, in heat protection, in floorcoverings, for laser marking, in dry preparations or pigment preparations.

## Revendications

1. Pigments d'interférence colorés et électro-conducteurs basés sur un support en forme de paillettes, dans lesquels le support en forme de paillettes comprend des paillettes de mica naturelles ou synthétiques ou des paillettes de $SiO_2$ et le support possède un revêtement comprenant une ou plusieurs couches et où la couche la plus extérieure et la plus éloignée du support est constituée d'au moins 95% en poids, sur la base du poids de cette couche, de carbone et comprend du carbone cristallin sous la forme de graphite et/ou de graphène et entoure une couche située en dessous de cette couche la plus extérieure ou des couches situées en dessous de cette couche la plus extérieure et possède une épaisseur de couche géométrique dans la plage de 1-5 nm, où les pigments d'interférence possèdent une couche comprenant du dioxyde de titane et/ou du dioxyde de titane hydraté ou au moins un système tri-couches comprenant une couche de $TiO_2$/ couche de $SiO_2$/couche de $TiO_2$ entre le support en forme de paillettes et la couche la plus extérieure comprenant du carbone cristallin, et l'épaisseur de couche géométrique d'au moins dans chaque cas une couche de $TiO_2$ est d'au moins 70 nm, où les pigments d'interférence électro-conducteurs possèdent une résistance spécifique de poudre inférieure à $1\times10^6$ ohms*cm.

2. Pigments d'interférence selon la revendication 1, **caractérisés en ce que** la couche la plus extérieure comprenant du carbone cristallin est constituée d'au moins 98% en poids de carbone.

3. Pigments d'interférence selon la revendication 1 ou 2, **caractérisés en ce que** la proportion de la couche la plus extérieure comprenant du carbone cristallin, sur la base du poids du pigment, va de 0,5 à 5% en poids.

4. Pigments d'interférence selon l'une ou plusieurs parmi les revendications 1 à 3, **caractérisés en ce qu'**ils possèdent une taille de particule dans la plage allant de 1 à 250 $\mu$m, et où les pigments d'interférence ayant une taille de particule inférieure à 10 $\mu$m sont présents selon une proportion en pourcentage par volume d'au plus 30% dans une poudre de pigments constituée des pigments d'interférence.

**5.** Pigments d'interférence selon l'une ou plusieurs parmi les revendications 1 à 4, **caractérisés en ce que** la résistance spécifique de poudre est inférieure à $1\times10^4$ ohms*cm.

**6.** Procédé de préparation de pigments d'interférence colorés et électro-conducteurs selon l'une ou plusieurs parmi les revendications 1 à 5, dans lequel des particules de support en forme de paillettes, qui sont des paillettes de mica naturelles ou synthétiques ou des paillettes de $SiO_2$ qui ont été revêtues par une ou plusieurs couches, où le revêtement comprend une couche de dioxyde de titane et/ou de dioxyde de titane hydraté ou au moins un système tri-couches comprenant une couche de $TiO_2$/couche de $SiO_2$/couche de $TiO_2$, sont revêtues par une couche la plus extérieure qui est constituée d'au moins 95% en poids, sur la base du poids de cette couche, de carbone et comprend du carbone cristallin sous la forme de graphite et/ou de graphène, dans un réacteur dans un courant de gaz porteur avec une alimentation en un composé carboné gazeux, par décomposition pyrolytique du composé carboné à une température dans la plage allant de 500°C à 700°C, où la couche la plus extérieure comprenant du carbone cristallin est appliquée selon une épaisseur de couche géométrique dans la plage allant de 1 à 5 nm, le composé carboné gazeux employé est l'acétone ou le 2-méthyl-3-butyn-2-ol et les pigments d'interférence électro-conducteurs possèdent une résistance spécifique de poudre inférieure à $1\times10^6$ ohms*cm.

**7.** Procédé selon la revendication 6, **caractérisé en ce que** les particules de support en forme de paillettes sont maintenues en mouvement dans le réacteur.

**8.** Utilisation de pigments d'interférence colorés et électro-conducteurs selon l'une ou plusieurs parmi les revendications 1 à 5, dans les peintures, les revêtements, les encres d'impression, les compositions de revêtement, les applications de sécurité, les matières plastiques, les matériaux céramiques, les verres, le papier, les films, pour la protection thermique, dans les revêtements de sols, pour le marquage au laser, dans des préparations sèches ou dans des préparations de pigment.

Fig 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3842330
- DE 4237990
- EP 0139557 A
- EP 0359569 A
- EP 0743654 A
- US 20040165272 A1
- US 6686042 B1
- US 3087827 A
- EP 0525526 A
- EP 0735114 A
- EP 0525526 B1
- EP 0735114 A1
- EP 0950693 A1
- EP 1641886 B1
- DE 69916717 T2
- DE 2557796 C2
- DE 4227082 A1

- EP 0675175 A2
- EP 0675175 A
- DE 4140296 A1
- DE 1467468
- DE 1959998
- DE 2009566
- DE 2214545
- DE 2215191
- DE 2244298
- DE 2313331
- DE 2522572
- DE 3137808
- DE 3137809
- DE 3151355
- DE 3211602
- DE 3235017
- US 3553001 A

**In der Beschreibung aufgeführte Nicht-Patentliteratur**

- **W. KLOSE.** Terminologie zur Beschreibung von Kohlenstoff als Feststoff. *Deutsche Keramische Gesellschaft, Fachausschussbericht Nr. 33, 3. Bericht des Arbeitskreises Kohlenstoff,* 2009
- **A.C. FERRARI ; J. ROBERTSON.** Interpretation of Raman spectra of disordered and amorphous carbon. University Cambridge, 24. November 1999

- **MONTE CARLO.** Colorimetric evaluation of pearlescent pigments. *Congress "Mondial Coleur 85,* 1985
- **R. GLAUSCH ; M. KIESER ; R. MAISCH ; G. PFAFF ; J. WEITZEL.** Perlglanzpigmente. Curt Vincentz Verlag, 1996, 83